# EUROPÄISCHE PATENTSCHRIFT

(11) **EP 2 301 704 B1**
(45) Veröffentlichungstag und Bekanntmachung des Hinweises auf die Patenterteilung: **09.10.2019**
(21) Anmeldenummer: 10174324.3
(22) Anmeldetag: 27.08.2010
(51) Int. Cl.: B23K 9/10, B23K 9/32, B23K 9/28

(54) **Handschweißbrenner**
Handheld welding torch
Chalumeau de soudage manuel

(30) Priorität: 11.09.2009 DE 102009040907
(43) Veröffentlichungstag der Anmeldung: 30.03.2011
(73) Patentinhaber: TBi Industries GmbH, 35463 Fernwald (DE)
(72) Erfinder: Binzel, Oliver, 4132 Muttenz (CH)
(74) Vertreter: advotec.

(56) Entgegenhaltungen:
- DE-U1- 9 409 478
- JP-A- 2007 021 542
- US-A- 6 051 808
- US-A1- 2004 020 908

## Beschreibung

Die Erfindung betrifft einen Handschweißbrenner mit einer Schaltvorrichtung, wobei die Schaltvorrichtung aus einem Schaltelement und Stellgliedern gebildet ist, wobei das Schaltelement relativ zu den Stellgliedern bewegbar gelagert ist, und wobei mittels des Schaltelements die Stellglieder betätigbar sind, wobei das Schaltelement an einer Oberseite eines Handgriffs des Handschweißbrenners angeordnet ist und wobei an einer Unterseite (19) des Handgriffs ein Kippschalter (18) zum Auslösen einer Schweißfunktion angeordnet ist.

Handschweißbrenner verfügen regelmäßig über Schaltvorrichtungen, welche in einem Handgriff integriert sind. Die Schaltvorrichtungen dienen im Wesentlichen zum Auslösen eines Schweißvorgangs mit beispielsweise einem Drahtvorschub. Weiter können in dem Handgriff weitere Schaltvorrichtungen in Art einer Fernsteuerung bzw. eines Fernsteuerungsmoduls zur Ansteuerung von Schweißmaschinenparametern wie Drahtfördergeschwindigkeit, Schweißleistung, Lichtbogenlänge, etc. integriert sein. So können Einstellungen der Schweißmaschine am Handgriff des Handschweißbrenners von einer Bedienperson geändert werden, ohne das der Schweißprozess unterbrochen oder der unmittelbare Arbeitsort verlassen werden muss. Die aus dem Stand der Technik bekannten Schaltvorrichtungen zur Einstellung einer Schweißmaschine können unter anderem als ein Doppeltaster, als eine zwei- oder vierfach Schaltwippe, als eine Kreuzwippe oder als einen Drehschalter mit Potentiometer ausgebildet sein. Beispielsweise kann an einer Oberseite eines Handgriffs eine Schaltvorrichtung bzw. Fernsteuerung und zusätzlich an einer Unterseite des Handgriffs ein Ein-/Aus-Taster zur Betätigung der Schweißfunktion der Schweißmaschine integriert sein.

Eine Bedienung der Schaltvorrichtung bzw. der Fernsteuerung am Handgriff erfolgt gewöhnlich an der Unterseite des Handgriffs mit dem Zeigefinger und an der Oberseite mittels des Daumens. Nachteilig bei der Bedienung der bekannten Schaltvorrichtungen ist, dass die Bedienung mittels in der Regel dicken Schweißerhandschuhen erfolgen muss, was häufig Fehlbedienungen zur Folge hat. Dies ist insbesondere dadurch begründet, dass die bekannten Taster aufgrund der limitierten Platzverhältnisse am Handgriff relativ klein ausgeführt sind und mehr als zwei Schaltzustände an einem Taster einstellbar sind. Insbesondere eine Verwendung mehrerer Schaltwippen ist nachteilig, da hier für einen Wechsel zwischen den Schaltwippen ein Anheben und Umgreifen des Daumens erfolgen muss, ohne dass eine Bedienperson während eines Schweißvorgangs einen Blick auf den Handgriff richten kann. Dies kann beispielsweise ein gleichzeitiges Auslösen von zwei Schaltwippen der Schaltvorrichtung zur Folge haben. Auch ist eine Stabilität der bekannten Schaltvorrichtungen begrenzt, da mechanische Belastungen, wie z.B. Stöße unmittelbar auf die als Stellglieder ausgebildete Taster wirken.

Aus der US 2004/0020908 A1 ist ein Handschweißbrenner bekannt, der an einer Unterseite eines Handgriffs einen Ein-Aus-Taster zur Betätigung einer Schweißfunktion und an einer Oberseite des Handgriffs einen einzelnen Schalter aufweist.

Die DE 94 09 478 U1 beschreibt einen Handschweißbrenner, wobei hier an einer Oberseite eines Handgriffs des Handschweißbrenners ein Schaltelement angeordnet ist, mit dem ein Schweißstrom regelbar und auch eine Schweißfunktion auslösbar ist. An einer Unterseite des Handgriffs sind keinerlei Schaltelement vorgesehen.

Der vorliegenden Erfindung liegt daher die Aufgabe zu Grunde, einen Handschweißbrenner vorzuschlagen, der gegenüber den aus dem Stand der Technik bekannten Handschweißbrennern über eine verbesserte Bedienung verfügt.

Diese Aufgabe wird durch einen Handschweißbrenner mit den Merkmalen des Anspruchs 1 gelöst.

Der erfindungsgemäße Handschweißbrenner umfasst eine Schaltvorrichtung, wobei die Schaltvorrichtung aus einem Schaltelement und Stellgliedern gebildet ist, wobei das Schaltelement relativ zu den Stellgliedern bewegbar gelagert ist, wobei mittels des Schaltelements die Stellglieder betätigbar sind, und wobei das Schaltelement in zumindest zwei Freiheitsgraden bewegbar ist, wobei das Schaltelement an einer Oberseite eines Handgriffs des Handschweißbrenners angeordnet ist, wobei an einer Unterseite des Handgriffs ein Kippschalter zum Auslösen einer Schweiß funktion angeordnet ist.

Die Erfindung beruht auf dem Gedanken, an einem Handgriff des Handschweißbrenners eine Schaltvorrichtung vorzusehen, die ein von einer Mehrzahl von Stellgliedern getrenntes Schaltelement aufweist. Weiter ist das Schaltelement in zumindest zwei Freiheitsgraden bewegbar, so dass die Stellglieder unabhängig voneinander alleine mit dem einen Schaltelement betätigt werden können. Eine sonst fehleranfällige Bedienung von beispielsweise einer Doppelwippe, gebildet aus zwei nebeneinander angeordneten Schaltelementen, wird durch die Verwendung des einzelnen Schaltelements bei der Erfindung wesentlich verbessert. Auch ist bei der Verwendung nur eines Schaltelements ein Umsetzen eines Bedienfingers oder ein Umgreifen einer Hand nicht mehr notwendig. Dadurch, dass das Schaltelement in zumindest zwei Freiheitsgraden bewegbar ist, kann mit dem einzelnen Schaltelement die Funktion einer Doppelwippe ebenso ausgefüllt werden. Weiterhin ist es vorteilhaft, dass die Stellglieder vom Schaltelement getrennt sind, so dass bei einer äußeren Beschädigung des Schaltelements, beispielsweise durch Herabfallen des Handschweißbrenners, die Stellglieder nicht zwangsläufig beschädigt werden.

In einer Ausführungsform ist das Schaltelement in translatorischen Freiheitsgraden bewegbar. D.h. ein Schaltvorgang kann durch eine schiebende oder auch kippende Bewegung des Schaltelements entlang einer linearen Bahn ausgelöst werden. Dabei ist das Schaltelement in mehreren Richtungen translatorisch bewegbar, entlang einer Längsachse des Handschweißbrenners und quer zu dieser.

Alternativ kann das Schaltelement in rotatorischen Freiheitsgraden bewegbar sein. Demnach kann das Schaltelement zur Durchführung eines Schalt- bzw. Einstellvorgangs um eine Längsachse des Schaltelements drehbar sein. Dabei kann das Schaltelement um nur einige Winkelgrade oder um mehrere Umdrehungen drehbar sein.

Die Schaltvorrichtung ist besonders leicht ausbildbar, wenn diese ein Gehäuse umfasst, wobei das Schaltelement dann relativ zu dem Gehäuse bewegbar gelagert sein kann. Die Schaltvorrichtung kann einfach mit einer Anschlussleitung versehen sein, so dass das Gehäuse der Schaltvorrichtung leicht an einem Handgriff des Handschweißbrenners adaptierbar ist. So kann beispielsweise ein vorhandener Handgriff mit einer Schaltvorrichtung versehen bzw. in einer dafür vorgesehenen Ausnehmung an einem Handgriff das Gehäuse der Schaltvorrichtung eingesetzt werden. Auch kann die Schaltvorrichtung dann unabhängig von dem Handschweißbrenner ausgebildet sein, wodurch die Schaltvorrichtung besonders einfach herstellbar und am Handschweißbrenner auswechselbar ist.

Auch kann das Gehäuse eine Kulissenführung für das Schaltelement ausbilden. So kann eine gleichzeitige Betätigung von mehr als einem Stellglied durch eine so ausgebildete Führung des Schaltelements in der Kulissenführung verhindert werden. Dabei kann die Kulissenführung so ausgebildet sein, dass eine Auswahl einer Bewegungsrichtung des Schaltelements nur in einer betätigungsfreien Neutralstellung des Schaltelements ermöglicht wird. Die Kulissenführung kann beispielsweise als eine kreuzförmige Durchgangsöffnung im Gehäuse ausgebildet sein, innerhalb der das Schaltelement bewegbar ist und in deren Zentrum die Neutralstellung vorgesehen ist.

Um eine Bedienung des Handschweißbrenners bzw. der Schaltvorrichtung zu erleichtern, kann das Schaltelement einen Betätigungsknopf zur manuellen Handhabung aufweisen. Der Betätigungsknopf kann beispielsweise gegenüber einer Doppelwippe vergleichsweise groß ausgebildet sein, so dass er mit einem Schweißerhandschuh leicht bewegt werden kann. Insbesondere wenn eine rotatorische Bewegung des Schaltelements vorgesehen ist, ist es vorteilhaft, wenn der Betätigungsknopf rund ausgebildet ist.

Um eine eventuelle Beschädigung des Betätigungsknopfs bzw. des Schaltelements zu vermeiden, kann das Gehäuse so ausgebildet sein, dass es den Betätigungsknopf entlang seines seitlichen Umfangs zumindest teilweise umgibt. So kann sichergestellt werden, dass beispielsweise bei einem Herabfallen des Handschweißbrenners der Handschweißbrenner nicht unmittelbar auf den Betätigungsknopf fällt oder während einer Benutzung des Handschweißbrenners eine unerwünschte Betätigung oder Beschädigung des Schaltelements erfolgt. Insbesondere kann der Betätigungsknopf in einer im Gehäuse ausgebildeten Ausnehmung bzw. Vertiefung versenkt sein, so dass der Betätigungsknopf das Gehäuse nur geringfügig in dem für eine Betätigung notwendigen Maße überragt.

In einer Ausführungsform des Handschweißbrenners kann ein Stellglied als ein elektromechanischer Schalter ausgebildet sein. Der elektromechanische Schalter kann in seiner einfachsten Form ein Taster oder ein Ein-/Ausschalter sein, der einen Schaltimpuls an eine Schweißmaschine übermitteln kann. Der elektromechanische Schalter kann beispielsweise getrennt von dem Schaltelement angeordnet sein, und durch dieses mittels eines mechanischen Kontakts betätigt werden.

In einer weiteren Ausführungsform kann ein Stellglied als ein optoelektrischer Schalter ausgebildet sein. Im Unterschied zu einem elektromechanischen Schalter kann bei dem optoelektrischen Schalter ein Schaltvorgang ohne einen mechanischen Kontakt mit dem Schaltelement ausgelöst werden. Da optoelektrische Schalter über keine mechanisch bewegten Bauteile verfügen, sind diese Schalter besonders langlebig.

Weiter kann ein Stellglied als ein wegmessendes Element ausgebildet sein. Ein wegmessendes Element kann beispielsweise ein Linear- oder Drehpotentiometer, ein Drehencoder oder einfach ein Maßstab einer sensorisch erfassbaren Teilung sein. Ein derartiges, wegmessendes Element ermöglicht beispielsweise eine stufenlose Einstellung eines Betriebsparameters.

In einer vorteilhaften Ausführungsform kann die Schaltvorrichtung zumindest vier Stellglieder aufweisen. So können vier Schaltzustände der Schaltvorrichtung mit nur einem Schaltelement bewirkt werden. Die vier Stellglieder können so angeordnet sein, dass sie in zwei Bewegungsrichtungen des Schaltelements betätigt werden können. In einer einfachsten Ausführungsform kann dies beispielsweise eine Bewegung des Schaltelements zwischen einer Schaltstellung vorne/hinten und einer Schaltstellung rechts/links sein. Weiter können die vier Stellglieder einfach auf einer Leiterplatte angeordnet sein. Auch können natürlich noch weitere Stellglieder vorgesehen werden, die im Rahmen weiterer Bewegungsrichtungen nutzbar sind.

Eine Betätigung der Stellglieder kann dann dadurch weiter vereinfacht werden, dass das Schaltelement einen Schaltring aufweist. Die Stellglieder können dann im Bereich des Schaltrings, welcher eine kreisförmige Kontaktfläche für die Stellglieder ausbilden kann, ebenfalls kreisförmig angeordnet sein. Ein Kippen des Schaltrings relativ zu den Stellgliedern in Richtung eines der Stellglieder bewirkt dann dessen Betätigung. Durch die Verwendung des Schaltrings ist es dabei unerheblich wie viele Stellglieder im Bereich des Schaltrings angeordnet sind.

Um eine Bewegung des Schaltelements zu begrenzen, kann die Schaltvorrichtung zumindest einen Anschlag aufweisen. Dadurch kann in vorteilhafter Weise verhindert werden, dass die Stellglieder, beispielsweise durch einen unbeabsichtigten Schlag auf das Schaltelement, infolge großer Krafteinwirkung beschädigt werden.

Für den Fall, dass ein Gehäuse für die Schaltvorrichtung vorgesehen ist, kann das Gehäuse bzw. eine Kulissenführung des Gehäuses so ausgebildet sein, dass das Gehäuse den Anschlag für das Schaltelement ausbildet. Alternativ kann der Anschlag auch durch andere Bauelemente ausgebildet sein, die geeignet sind eine Bewegung des Schaltelements zu begrenzen.

Besonders vorteilhaft ist es, wenn das Schaltelement mittels einer Kugelkalotte des Schaltelements in einer Lagereinrichtung der Schaltvorrichtung bewegbar gelagert ist. Das Schaltelement ist dann im Rahmen einer Kreisbahn, welche von einer Kugeloberfläche der Kugelkalotte definiert ist, beliebig bewegbar. Auch wird es möglich das Schaltelement um seine eigene Achse zu drehen. Gegenüber einer Linearführung oder einer Wippe ermöglicht eine derartige Lagereinrichtung daher eine Nutzung einer Vielzahl möglicher Bewegungsrichtungen mit einer einzigen Lagerung.

Weiter ist es vorteilhaft, wenn die Lagereinrichtung ein Federelement aufweist, welches eine Rückstellung des Schaltelements in eine betätigungsfreie Neutralstellung bewirken kann. Das heißt das Schaltelement kann dann nach einer Betätigung des Schaltelements durch eine Bedienperson immer automatisch in eine Ausgangslage zurückbewegt werden. Dabei kann die Neutralstellung so gewählt werden, dass keine Stellglieder vom Schaltelement betätigt werden. Auch kann eine Federkraft des Federelements so gewählt bzw. das Federelement so einstellbar ausgebildet sein, dass eine gewünschte Betätigungskraft des Schaltelements zum Schalten der Stellglieder aufgebracht werden muss. Beispielsweise kann als ein Federelement eine Spiralfeder bzw. Druckfeder verwendet werden.

Nachfolgend wird eine bevorzugte Ausführungsform der Erfindung unter Bezugnahme auf die beigefügten Zeichnungen näher erläutert.

Es zeigen:
- **Fig. 1:**: Einen Handschweißbrenner mit einer Schaltvorrichtung in einer perspektivischen Darstellung;
- **Fig. 2:**: den Handschweißbrenner mit der Schaltvorrichtung in einer Explosionsdarstellung;
- **Fig. 3:**: die Schaltvorrichtung in einer vergrößerten perspektivischen Darstellung;
- **Fig. 4:**: eine Längsschnittansicht der Schaltvorrichtung;
- **Fig. 5:**: eine perspektivische Darstellung der Schaltvorrichtung ohne ein Gehäuse;
- **Fig. 6:**: eine perspektivische Darstellung der Schaltvorrichtung ohne einen Betätigungsknopf.

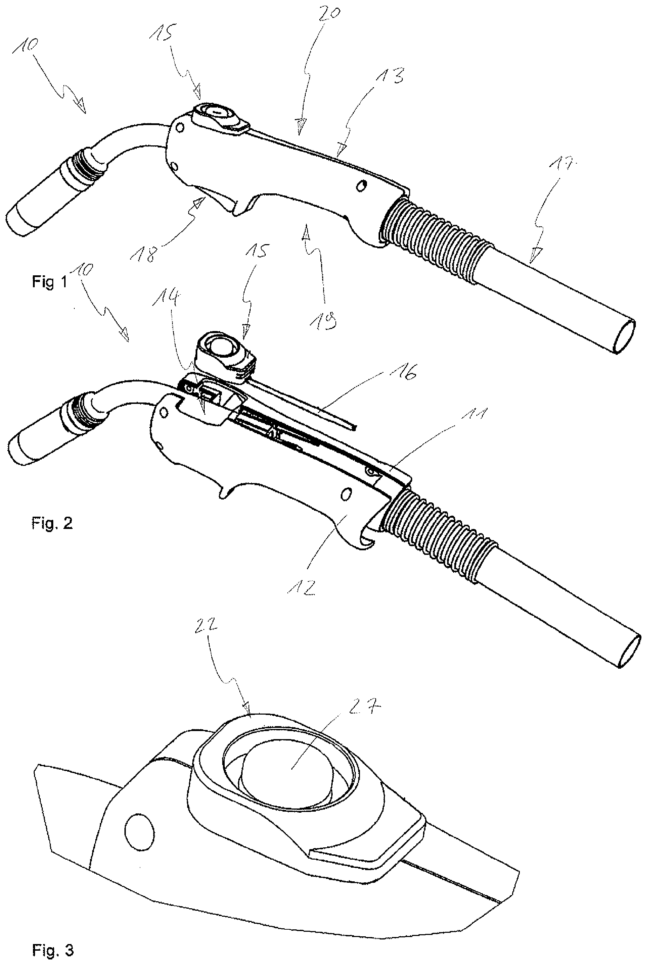

Eine Zusammenschau der **Fig. 1** bis **2** zeigt einen Handschweißbrenner 10 mit einem aus Griffschalen 11 und 12 gebildeten Handgriff 13 und einer in einer zwischen den Griffschalen 11 und 12 gebildeten Ausnehmung 14 angeordneten Schaltvorrichtung 15. Die Schaltvorrichtung 15 ist so weit in die Ausnehmung 14 eingesetzt, dass eine Anschlussleitung 16 der Schaltvorrichtung 15 innerhalb des Handgriffs 13 verläuft. Die Anschlussleitung 16 dient der Signalübertragung an eine hier nicht näher dargestellte Steuerung einer hier ebenfalls nicht vollständig dargestellten Schweißmaschine. Die Anschlussleitung 16 ist dabei entlang eines Versorgungsschlauches 17 geführt. Weiter ist am Handgriff 13 eine als Kippschalter 18 ausgebildete Schaltvorrichtung angeordnet, welche zum Auslösen einer Schweißfunktion dient. Der Kippschalter 18 ist auf einer Unterseite 19 des Handgriffs 13 angeordnet und wird vorzugsweise mit einem Zeigefinger betätigt und die Schaltvorrichtung 15 ist auf einer Oberseite 20 des Handgriffs 13 angeordnet und wird vorzugsweise mit einem Daumen betätigt.

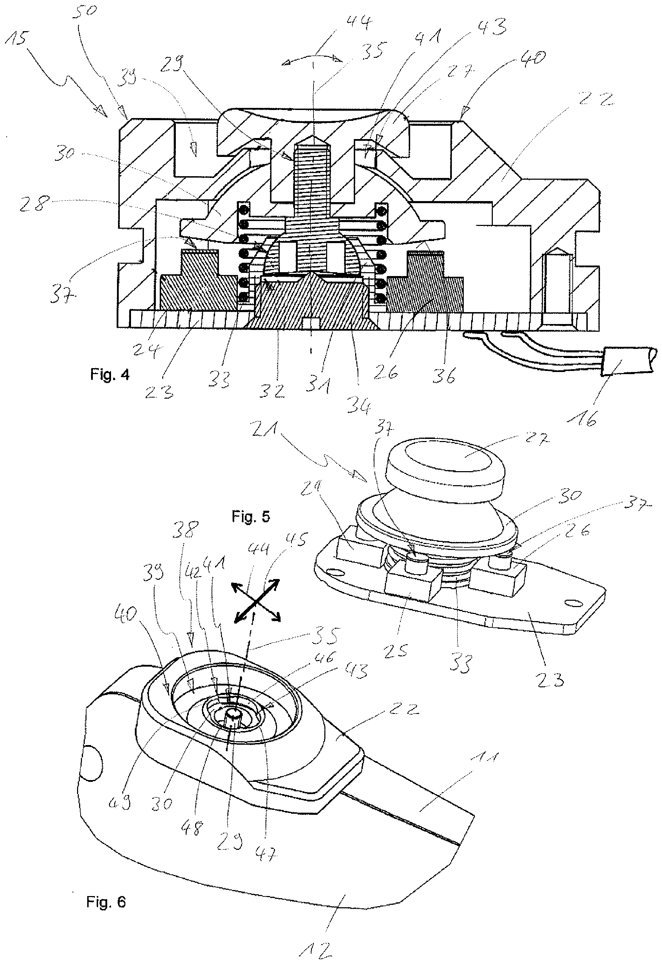

Aus einer Zusammenschau der **Fig. 3** bis **6** ist der nähere Aufbau der Schaltvorrichtung 15 zu ersehen.

Die Schaltvorrichtung 15 ist aus einem Schaltelement 21, einem Gehäuse 22 und auf einer Leiterplatte 23 angeordneten Stellgliedern 24, 25 und 26 gebildet. Ein weiteres, viertes Stellglied ist ebenfalls vorhanden, jedoch aus den Darstellungen nicht ersichtlich. Das Schaltelement 21 ist wiederum aus einem Betätigungsknopf 27, einer Kugelkalotte 28 mit einer Schraubbefestigung 29 für den Betätigungsknopf 27 und einem Schaltring 30 gebildet. Die Kugelkalotte 28 liegt in einer Kugelpfanne 31 einer so ausgebildeten Lagereinrichtung 32 allseitig beweglich gelagert, wobei eine Druckfeder 33 zwischen der Kugelpfanne 31 und dem Schaltring 30 angeordnet ist und eine Rückstellung des Schaltelements 21 in eine hier dargestellte Neutralstellung bewirkt. Die Kugelpfanne 31 ist mittels einer Schraube 34 an der Leiterplatte 23 fest fixiert. Die derart ausgebildete Lagereinrichtung 32 ermöglicht nun ein Verkippen bzw. eine Bewegung des Schaltelements 21 relativ zu einer Längsachse 35 des Schaltelements 21. Dabei gelangt eine Kontaktoberfläche 36 des Schaltrings 30 auf einen Schaltkontakt 37 eines der Stellglieder 24, 25 oder 26 bzw. des nicht sichtbaren Stellglieds.

An einer Oberseite 38 des Gehäuses 22 ist eine Ausnehmung 39 ausgebildet innerhalb der der Betätigungsknopf 27 bewegbar angeordnet ist. Die Ausnehmung 39 ist so ausgebildet, dass der Betätigungsknopf 27 einen Umfangsrand 40 des Gehäuses 22 nur geringfügig überragt und so durch den Umfangsrand 40 vor Beschädigungen geschützt ist. Weiter ist innerhalb der Ausnehmung 39 eine Durchgangsöffnung 41 ausgebildet, die wiederum eine Kulissenführung 42 für den Betätigungsknopf 27 ausbildet. Eine Innenkontur 43 der Durchgangsöffnung 41 ist demnach so ausgebildet, dass in Richtung von hier mit Pfeilen dargestellten Betätigungsachsen 44 und 45 Materialausnehmungen 46, 47, 48 und 49 vorgesehen sind. Dadurch wird alleine eine Bewegung des Betätigungsknopfs 27 bzw. des Schaltelements 21 in Richtung der Betätigungsachsen 44 und 45 ausgehend von der durch die Längsachse 35 definierten Neutralstellung ermöglicht. Die Materialaussparungen 46 bis 49 bilden dabei gleichzeitig jeweils einen Anschlag für den Betätigungsknopf 27 bzw. das Schalterelement 21 aus.

Weiter ist das Gehäuse 22 so ausgebildet, dass das Gehäuse 22 mit der Leiterplatte 23 verschlossen werden kann bzw. die Durchgangsöffnung 41 mittels des Betätigungsknopfes 27 unabhängig von einer Betätigung desselben vollständig abgedeckt werden kann, so dass die Schaltvorrichtung 15 eine in sich geschlossene Baugruppe 50 bildet, die über die Anschlussleitung 16, welche an der Leiterplatte 23 kontaktiert ist, in den Handgriff 13 einsetzbar ist.

## Patentansprüche

1. Handschweißbrenner (10) mit einer Schaltvorrichtung (15), wobei die Schaltvorrichtung aus einem Schaltelement (21) und Stellgliedern (24, 25, 26) gebildet ist, wobei das Schaltelement relativ zu den Stellgliedern bewegbar gelagert ist, und wobei mittels des Schaltelements die Stellglieder betätigbar sind, wobei an einer Unterseite (19) des Handgriffs ein Kippschalter (18) zum Auslösen einer Schweißfunktion angeordnet ist, wobei das Schaltelement an einer Oberseite (20) eines Handgriffs (13) des Handschweißbrenners angeordnet ist,
**dadurch gekennzeichnet,**
**dass** das Schaltelement in zumindest zwei Freiheitsgraden (44, 45) bewegbar ist.

2. Handschweißbrenner nach Anspruch 1,
**dadurch gekennzeichnet,**
**dass** das Schaltelement (21) in rotatorischen Freiheitsgraden bewegbar ist.

3. Handschweißbrenner nach Anspruch 1 oder 2
**dadurch gekennzeichnet,**
**dass** die Schaltvorrichtung (15) ein Gehäuse (22) umfasst, und wobei das Schaltelement relativ zu dem Gehäuse bewegbar gelagert ist.

4. Handschweißbrenner nach Anspruch 3,
**dadurch gekennzeichnet,**
**dass** das Gehäuse (22) eine Kulissenführung (42) für das Schaltelement (21) ausbildet.

5. Handschweißbrenner nach Anspruch 3 oder 4,
**dadurch gekennzeichnet,**
**dass** das Schaltelement (21) einen Betätigungsknopf (27) zur manuellen Handhabung aufweist.

6. Handschweißbrenner nach Anspruch 5,
**dadurch gekennzeichnet,**
**dass** das Gehäuse (22) den Betätigungsknopf (27) entlang seines seitlichen Umfangs zumindest teilweise umgibt.

7. Handschweißbrenner nach einem der vorangehenden Ansprüche,
**dadurch gekennzeichnet,**
**dass** ein Stellglied (24, 25, 26) als ein elektromechanischer Schalter ausgebildet ist.

8. Handschweißbrenner nach einem der vorangehenden Ansprüche,
**dadurch gekennzeichnet,**
**dass** ein Stellglied (24, 25,26) als ein optoelektrischer Schalter ausgebildet ist.

9. Handschweißbrenner nach einem der vorangehenden Ansprüche,
**dadurch gekennzeichnet,**
**dass** ein Stellglied (24, 25, 26) als ein wegmessendes Element ausgebildet ist.

10. Handschweißbrenner nach einem der vorangehenden Ansprüche,
**dadurch gekennzeichnet,**
**dass** die Schaltvorrichtung (15) zumindest vier Stellglieder (24, 25, 26) aufweist.

11. Handschweißbrenner nach einem der vorangehenden Ansprüche,
**dadurch gekennzeichnet,**
**dass** das Schaltelement (21) einen Schaltring (30) zur Betätigung der Stellglieder (24, 25, 26) aufweist.

12. Handschweißbrenner nach einem der vorangehenden Ansprüche,
**dadurch gekennzeichnet,**
**dass** die Schaltvorrichtung (15) zumindest einen Anschlag (43) zur Begrenzung einer Bewegung des Schaltelements (21) aufweist.

13. Handschweißbrenner nach einem der vorangehenden Ansprüche,
**dadurch gekennzeichnet,**
**dass** das Schaltelement (21) mittels einer Kugelkalotte (28) des Schaltelements in einer Lagereinrichtung (32) der Schaltvorrichtung (15) bewegbar gelagert ist.

14. Handschweißbrenner nach Anspruch 13,
**dadurch gekennzeichnet,**
**dass** die Lagereinrichtung (32) ein Federelement (33) aufweist, welches eine Rückstellung des Schaltelements (21) in eine betätigungsfreie Neutralstellung bewirken kann.

15. Handschweißbrenner nach Anspruch 1, **dadurch gekennzeichnet, dass** das Schaltelement (21) in translatorischen Freiheitsgraden (44, 45) bewegbar ist.

## Claims

1. A hand welding torch (10) with a switching device (15), wherein the switching device is formed from a switching element (21) and actuators (24, 25, 26), wherein the switching element is movably mounted relative to the actuators, and wherein the actuators can be actuated by means of the switching element, wherein the switching element can be moved in at least two degrees of freedom (44, 45),
wherein the switching element is disposed on an upper side (20) of a hand grip (13) of the hand welding torch,
**characterised in that**
a rocker switch (18) for triggering a welding function is disposed on a bottom side (19) of the hand grip.

2. The hand welding torch according to claim 1,
**characterised in that**
the switching element (21) can be moved in rotational degrees of freedom.

3. The hand welding torch according to claim 1 or 2,
**characterised in that**
the switching device (15) comprises a housing (22), and wherein the switching element is movably mounted relative to the housing.

4. The hand welding torch according to claim 3,
**characterised in that**
the housing (22) forms a slotted guide (42) for the switching element (21).

5. The hand welding torch according to claim 3 or 4,
**characterised in that**
the switching element (21) has an actuation knob (27) for manual handling.

6. The hand welding torch according to claim 5,
**characterised in that**
the housing (22) encompasses the actuation knob (27) along its lateral circumference at least to some extent.

7. The hand welding torch according to any one of the preceding claims,
**characterised in that**
an actuator (24, 25, 26) is realised as an electromechanical switch.

8. The hand welding torch according to any one of the preceding claims,
**characterised in that**
an actuator (24, 25, 26) is realised as an optoelectrical switch.

9. The hand welding torch according to any one of the preceding claims,
**characterised in that**
an actuator (24, 25, 26) is realised as a path measuring element.

10. The hand welding torch according to any one of the preceding claims,
**characterised in that**
the switching device (15) has at least four actuators (24, 25, 26).

11. The hand welding torch according to any one of the preceding claims,
**characterised in that**
the switching element (21) has a switching ring (30) for the actuation of the actuators (24, 25, 26).

12. The hand welding torch according to any one of the preceding claims,
**characterised in that**
the switching device (15) has at least one stop (43) for limiting a movement of the switching element (21).

13. The hand welding torch according to any one of the preceding claims,
**characterised in that**
the switching element (21) is movably mounted by means of a universal ball joint (28) of the switching element in a mounting assembly (32) of the switching device (15).

14. The hand welding torch according to claim 13,
**characterised in that**
the mounting assembly (32) has a spring element (33) which can effect a resetting of the switching element (21) into an actuation-free neutral position.

15. The hand welding torch according to claim 1,
**characterised in that**
the switching element (21) can be moved in translational degrees of freedom (44, 45).

## Revendications

1. Chalumeau manuel (10) ayant un dispositif de commutation (15), le dispositif de commutation étant formé d'un élément de commutation (21) et d'actionneurs (24, 25, 26), l'élément de commutation étant monté de manière mobile par rapport aux actionneurs, et les actionneurs étant actionnables au moyen de l'élément de commutation, l'élément de commutation étant mobile en au moins deux degrés de liberté (44, 45), l'élément de commutation étant disposé sur un côté supérieur (20) d'une poignée (13) du chalumeau manuel,
**caractérisé en ce qu'**
un interrupteur à bascule (18) est disposé sur un côté inférieur (19) de la poignée pour déclencher une fonction de soudage.

2. Chalumeau manuel selon la revendication 1,
**caractérisé en ce que**
l'élément de commutation (21) est mobile en degrés de liberté de rotation.

3. Chalumeau manuel selon la revendication 1 ou 2,
**caractérisé en ce que**
le dispositif de commutation (15) comprend un boîtier (22), l'élément de commutation étant monté de manière mobile par rapport au boîtier.

4. Chalumeau manuel selon la revendication 3,
**caractérisé en ce que**
le boîtier (22) forme un guide de coulisse (42) pour l'élément de commutation (21).

5. Chalumeau manuel selon la revendication 3 ou 4,
**caractérisé en ce que**
l'élément de commutation (21) a un bouton d'actionnement (27) pour le maniement manuel.

6. Chalumeau manuel selon la revendication 5,
**caractérisé en ce que**
le boîtier (22) entoure, au moins partiellement, le bouton d'actionnement (27) le long de sa circonférence latérale.

7. Chalumeau manuel selon l'une quelconque des revendications précédentes,
**caractérisé en ce qu'**
un actionneur (24, 25, 26) est réalisé comme commutateur électromécanique.

8. Chalumeau manuel selon l'une quelconque des revendications précédentes,
**caractérisé en ce qu'**
un actionneur (24, 25, 26) est réalisé comme commutateur optoélectrique.

9. Chalumeau manuel selon l'une quelconque des revendications précédentes,
**caractérisé en ce qu'**
un actionneur (24, 25, 26) est réalisé comme élément de mesure de trajet.

10. Chalumeau manuel selon l'une quelconque des revendications précédentes,
**caractérisé en ce que**
le dispositif de commutation (15) a au moins quatre actionneurs (24, 25, 26).

11. Chalumeau manuel selon l'une quelconque des revendications précédentes,
**caractérisé en ce que**
l'élément de commutation (21) a un anneau de commutation (30) pour actionner les actionneurs (24, 25, 26).

12. Chalumeau manuel selon l'une quelconque des revendications précédentes,
**caractérisé en ce que**
le dispositif de commutation (15) a au moins une butée (43) pour limiter un mouvement de l'élément de commutation (21).

13. Chalumeau manuel selon l'une quelconque des revendications précédentes,
**caractérisé en ce que**
l'élément de commutation (21) est monté de manière mobile dans un ensemble de montage (32) du dispositif de commutation (15) au moyen d'une calotte sphérique (28) de l'élément de commutation.

14. Chalumeau manuel selon la revendication 13,
**caractérisé en ce que**
l'ensemble de montage (32) a un élément ressort (33) qui peut effectuer une remise de l'élément de commutation (21) à une position neutre sans actionnement.

15. Chalumeau manuel selon la revendication 1,
**caractérisé en ce que**
l'élément de commutation (21) est mobile en degrés de liberté (44, 45) de translation.
